# EUROPEAN PATENT SPECIFICATION

(11) **EP 2 739 671 B1**
(45) Date of publication and mention of the grant of the patent: **07.11.2018**
(21) Application number: 11760921.4
(22) Date of filing: 12.09.2011
(51) Int. Cl.: C08G 77/16, C08L 83/04, C08K 5/00

(54) **MOISTURE-CURABLE, ELASTOMERIC, TRANSLUCENT SILICONE WATERPROOFING COATING AND METHOD OF MAKING THE SAME**
FEUCHTIGKEITSHÄRTENDE, ELASTOMERE, DURCHSCHEINENDE UND WASSERDICHTE SILIKONBESCHICHTUNG UND HERSTELLUNGSVERFAHREN DAFÜR
REVÊTEMENT DURCISSABLE PAR L'HUMIDITÉ, ÉLASTOMÈRE, DE SILICONE TRANSLUCIDE, RÉSISTANT À L'EAU, ET SON PROCÉDÉ DE FABRICATION

(30) Priority: 06.07.2011 US 201161504806 P
(43) Date of publication of application: 11.06.2014
(73) Proprietor: Momentive Performance Materials Inc., Waterford, NY 12188 (US)
(72) Inventor: LUCAS, Gary, Morgan, Clifton Park, NY 12065-4639 (US)
(74) Representative: Zinnecker, Armin
(86) International application number: PCT/US2011/051161
(87) International publication number: WO 2013/006189

(56) References cited:
- EP-A1- 1 043 356
- EP-A2- 0 507 177
- US-A- 4 528 353

## Description

### FIELD OF THE INVENTION

The present invention relates to elastomeric translucent waterproof coatings for the construction industry. The present invention also relates to a process of making elastomeric translucent waterproof coatings. There are also provided substrates coated with the elastomeric translucent waterproof coatings.

### BACKGROUND OF THE INVENTION

Waterproof coatings are used in the construction industry to provide for weather and waterproofing protection of exterior building facades. Some waterproof coatings are pigmented-opaque calcium carbonate filled compositions that change the color/appearance of the façade of buildings when applied. Other waterproof coatings can decrease the pigmentation of the façade of buildings compared to calcium carbonate filled coatings, but these other coatings, which are largely acrylic and polyurethane based coatings, lack the necessary long-term durability and UV resistance of the filled coatings.

Thus, there exists a demand for a translucent waterproof coating that has the long-term durability and UV resistance of calcium carbonate filled waterproof coatings.

Exemplary coatings of the generic kind are disclosed in EP 1 043 356 A1.

### SUMMARY OF THE INVENTION

One objective of the present invention is directed to a one-part, moisture-curable, elastomeric, translucent coating composition comprising:
(a) a di-hydroxy-terminated dimethylpolysiloxane polymer;
(b) a reinforcing filler;
(c) an organic solvent;
(d) a polyalkoxysilane crosslinking agent;
(e) an organo-silane adhesion promoter; and,
(f) a titanium condensation cure catalyst,
wherein the composition is a one-part, moisture-curable, elastomeric, translucent coating composition.

Another objective of the present invention is to provide a process of forming a one-part, moisture-curable, elastomeric, translucent coating composition comprising:
combining the parts:
   (a) a di-hydroxy-terminated dimethylpolysiloxane polymer;
   (b) a reinforcing filler;
   (c) an organic solvent;
   (d) a polyalkoxysilane crosslinking agent;
   (e) an organo-silane adhesion promoter; and,
   (f) a titanium condensation cure catalyst
to provide a one-part moisture-curable, elastomeric, translucent coating composition.

The present invention is further described in the detailed description section provided below.

### BRIEF DESCRIPTION OF THE FIGURES

Figure 1 shows a series of different substrates coated with the composition according to the present invention.
Figure 2 shows a brick wall coated with the composition according to the present invention.

### DETAILED DESCRIPTION OF THE INVENTION

It has been unexpectedly discovered by the inventors herein that silicone-based coating compositions containing low-viscosity silicone parts can provide for elastomeric and translucent waterproof coatings that do not alter the appearance of substrates, e.g., building facades, to which they are applied but do provide long-term durability, UV resistance and resistance to wind and extreme temperatures (e.g., below 40 degrees Fahrenheit and above 85 degrees Fahrenheit)

It will be understood herein that all measures of viscosity are obtained at 25 degrees Celsius unless noted otherwise.

In one non-limiting embodiment herein the di-hydroxy-terminated dimethylpolysiloxane polymer (a) may have the formula:

MDₐM

with the subscript a equal to or greater than 1, specifically from 1 to about 3000, more specifically from 1 to about 2000 and most specifically from 1 to about 1000 where M=(HO)(CH₃)₂SiO_{1/2}; and,

D= (CH₃)₂SiO_{2/2}.

The di-hydroxy-terminated dimethylpolysiloxane polymer (a) have a viscosity of less than 5,000 cps wherein the lower endpoint is greater than zero, such as 1 cps or 5 cps. In one non-limiting
embodiment herein the di-hydroxy-terminated dimethylpolysiloxane polymer (a) may be a mixture of di-hydroxy-terminated dimethylpolysiloxane polymers each having a different viscosity. For example, the di-hydroxy-terminated dimethylpolysiloxane polymer part (a) may comprises one or more lower viscosity di-hydroxy-terminated dimethylpolysiloxane polymers having a viscosity of from about 1cps or 5cps up to about 750 cps, preferably from about 50 cps up to about 600 cps, wherein such a di-hydroxy-terminated dimethylpolysiloxane polymer is in admixture with one or more higher viscosity di-hydroxy-terminated dimethylpolysiloxane polymers having a viscosity of from about 1,000 cps to about 5,000 cps, preferably from about 2,000 cps to about 4,000 cps.

The level of incorporation of the di-hydroxy-terminated dimethylpolysiloxane polymer (a) ranges from slightly above 0 weight % to about 80% weight %, more preferably from about 20% weight % to about 70% weight %, and most preferably from about 40% weight % to about 60% weight % of the total one-part, moisture-curable, elastomeric, translucent coating composition.

The one-part, moisture-curable, elastomeric translucent coating composition of the present invention may also comprise a reinforcing filler (b). The reinforcing filler (b) useful in the present invention is a filler or mixture of fillers that is selected from those known to be useful in silicone compositions, provided they do not significantly impair the translucency of the coating, i.e., that a substrate coated maintains its original appearance following application of the coating thereof.

The fillers (b) include ground, precipitated and colloidal calcium carbonates which are treated with compounds such as stearate or stearic acid; reinforcing silicas such as fumed silicas, precipitated silicas, silica gels and hydrophobized silicas and silica gels; crushed and ground quartz, alumina, aluminum hydroxide, titanium hydroxide, diatomaceous earth, iron oxide, carbon black and graphite or clays such as kaolin, bentonite or montmorillonite for example.

Preferably, the filler (b) is silica filler, such as a silica filler doubly treated with D4 and hexamethyldisilazane. The type of filler will determine the amount of filler that is included in the one-part, moisture-curable, elastomeric, translucent coating composition of the present invention. The amount of filler useful in the present invention is generally from about 2 weight % to about 20 weight %, more preferably from about 5 weight % to about 15 weight %, and most preferably from about 8 weight % to about 12 weight % of the total one-part, moisture-curable, elastomeric, translucent coating composition. The filler may be a single species or a mixture of two or more species.

The one-part, moisture-curable, elastomeric, translucent coating composition of the present invention may also comprise an organic solvent (c) such as for example, a linear aliphatic hydrocarbon solvent. One example of organic solvent (c) can be C12-C14 aliphatic hydrocarbon fluid.

The level of incorporation of organic solvent (c) ranges from about 0 weight % to about 60 weight %, more preferably from about 5 weight % to about 50 weight %, and most preferably from about 20 weight % to about 40 weight % of the one-part, moisture-curable, elastomeric, translucent coating composition.

The one-part, moisture-curable, elastomeric, translucent coating composition of the present invention may also comprise a VOC exempt dialkyl cyclic siloxane. Examples of cyclic siloxane solvents can be for example hexamethylcyclotetrasiloxane or octamethylcyclopentasiloxane.

The level of incorporation of VOC exempt dialkylcyclosiloxanes ranges from about 0 weight % to about 60 weight %, more preferably from about 5 weight % to about 50 weight %, and most preferably from about 20 weight % to about 40 weight % of the one-part, moisture-curable, elastomeric, translucent coating composition.

The one-part, moisture-curable, elastomeric, translucent coating composition of the present invention may also comprise polyalkoxysilane crosslinking agent (d) which generally has the formula:

(R¹O)ₓR²_{y}Si

where R¹ and R², are independently chosen monovalent C1 to C60 hydrocarbon radicals, such as methyl, ethyl, propyl, isopropyl, butyl, tert-butyl, sec-butyl and the like, and where x is 2, 3, or 4 and y is zero, one or two, provided that x+y=4. One specific example of the polyalkoxysilane crosslinking agent (d) is methyltrimethoxysilane.

The level of incorporation of the polyalkoxysilane crosslinking agent (d) ranges from about 0.5 weight % to about 10 weight %, more preferably from about 1 weight % to about 5 weight %, and most preferably from about 1.5 weight % to about 3 weight % of the total one-part, moisture-curable, elastomeric, translucent coating composition.

The one-part, moisture-curable, elastomeric, translucent coating compositions of the present invention may also comprise an organo-silane adhesion promoter (e), the preferred organo-silane adhesion promoter (e) being 1,3,5-tris(trimethoxysil- ylpropyl)isocyanurate. Other organo-silane adhesion promoters (e) useful in the present invention are: n-2-aminoethyl-3-aminopropyltriethoxysilane, gamma.-aminopropyltriethoxysilane, gamma-aminopropyltrimethoxysilane, aminopropyltrimethoxysilane, bis-gamma-trimethoxysilypropylamine, N-Phenyl-gamma-aminopropyltrimethoxysilane, triaminofunctionaltrimethoxysilane, gamma-aminopropylmethyldiethoxysilane, gamma-aminopropylmethyldiethoxysilane, methacryloxypropyltrimethoxysilane, methylaminopropyltrimethoxysilane, gamma-glycidoxypropylethyldimethoxysilane, gamma-glycidoxypropyltrimethoxysilane, gamma-glycidoxyethyltrimethoxysilane, beta-(3,4-epoxycyclohexyl)propyltrimethoxysilane, beta-(3,4-epoxycyclohexyl) ethylmethyldimethoxysilane, isocyanatopropyltriethoxysilane, isocyanatopropylmethyldimethoxysilane, beta-cyanoethyltrimethoxysilane, gamma-acryloxypropyltrimethoxysilane, gamma-methacryloxypropylmethyldimethoxysilane, 4-amino-3,3,-dimethylbutyltrimethoxysilane, and n-ethyl-3-trimethoxysilyl-2-methylpropanamine.

The level of incorporation of the organo-silane adhesion promoter (e) ranges from about 0.1 weight % to about 5.0 weight %, more preferably from about 0.5 weight % to about 4.0 weight %, and most preferably from about 1.0 weight % to about 2.0 weight % of the total one-part, moisture-curable, elastomeric, translucent coating composition.

The one-part, moisture-curable, elastomeric, translucent coating composition of the present invention also comprises a titanium condensation cure catalyst (f). The titanium condensation cure catalyst (f) can be any titanium condensation cure catalyst known to be useful for facilitating crosslinking in silicone compositions. In one embodiment, chelated titanium compounds, for example, 1,3-propanedioxytitanium bis(ethylacetoacetate); di-isopropoxytitanium bis(ethylacetoacetate); and tetra-alkyl titanates, for example, tetra n-butyl titanate and tetra-isopropyl titanate, can be used as the titanium condensation cure catalyst (f).

The level of Incorporation of the titanium condensation cure catalyst (f), ranges from about 0.1 weight % to about 5.0 weight %, more preferably from about 0.5 weight % to about 4.0 weight %, and most preferably from about 1.0 weight % to about 3.0 weight % of the total one-part, moisture-curable, elastomeric, translucent coating composition.

It will be understood herein that the term "one-part" in the expression one-part, moisture-curable, elastomeric, translucent coating composition means that all of the parts (a)-(f) are in contact with each other and have not been separated in any fashion.

It will be understood herein that the term "moisture-curable" in the expression one-part, moisture-curable, elastomeric, translucent coating composition means that the composition can achieve at least some level of cure following exposure to at least atmospheric moisture. In one embodiment, the one-part, moisture-curable, elastomeric, translucent coating composition can cure to a non-tacky state in a period of from about 5 minutes to about 8 hours, specifically from about 10 minutes to about 4 hours and most specifically from about 15 minutes to about 2 hours at a temperature of 25 degrees Celsius when exposed to atmospheric moisture.

in one embodiment herein it will be understood that the one-part, moisture-curable, elastomeric, translucent coating composition can self-bond to a substrate when applied thereto, i.e., the coating composition does not require any additional presence of a bonding layer or bonding material or other chemical or physical means of attachment for proper coating of the substrate.

The process of forming the one-part, moisture-curable, elastomeric, translucent coating composition herein can comprise combining the parts (a)-(f). Such a combination can take place piece-meal over time or simultaneously.

Furthermore, the one-part, moisture-curable, elastomeric, translucent coating compositions described herein can be prepared (e.g., combined) using either batch or continuous modes of manufacture. Preferably, the ingredients such as di-hydroxy-terminated dimethylpolysiloxane polymer (a), reinforcing filter (b), organic solvent (c), polyalkoxysilane crosslinking agent (d), organo-silane adhesion promoter (e), titanium condensation cure catalyst (f) and any optional plasticizers, process aids, and other additives are combined in a continuous compounding extruder to produce the desired one-part, moisture-curabie, elastomeric, translucent coating composition. The continuous compounding extruder can be any continuous compounding extruder such as the twin screw Werner-Pfleiderer/Coperion extruder, or a Buss, or P.B. Kokneader extruder.

In the broadest conception of the present invention, all the ingredients may be mixed in the continuous compounding extruder. In such a process, which is continuous, the extruder is operated at a range of from about 50 degrees C. to about 100 degrees C., but more preferably in the range of from about 60 degrees C. to about 80 degrees C., and even more preferably, the extruder is operated at a partial vacuum so as to remove any volatiles during the mixing process.

The compositions herein can be formulated as clear, translucent compositions. The term dear or transparent according to the present invention is intended to connote that a translucent coating of the present invention allows ready viewing of the substrate on which it is coated. By contrast, an opaque composition renders it impossible to dearly view a substrate which has been coated with the opaque composition, and significantly impairs the appearance of the substrate following the coating thereof. Thus, according to the present invention, there are differences between transparent (clear) and opaque compositions. These differences can be noted by the naked eye in the manner indicated herein and as is known to those skilled in the art.

The compositions herein can be formulated as elastomeric compositions. The term elastomeric according to the present invention is understood to mean that the composition when applied to a substrate can provide for effective UV, weather and water protection without excessive hardening of the coating over time which can result in visible pitting, cracking and flaking of the coating from the substrate. Such elastomeric properties of the coating can be appreciated by those skilled in the art by visible inspection of the coating. In one embodiment, the elastomeric advantages of the coating composition can be provided when the coating provides the herein described levels of modulus and elongation, as well as the levels of stability and UV resistance described herein.

The process of forming the one-part, moisture-curable, elastomeric, translucent coating composition herein can further comprise applying the combined parts of the coating composition (a)-(f) onto a substrate.

In one embodiment herein the substrate can comprise any material that may be on the face of a building or structure that is sought to be waterproofed and/or weather protected, such as concrete, brick, wood, metal, glass, plastic, stone, mortar, painted substrates, and the like.

In another embodiment the amount of coating applied to a substrate can depend on several factors such as the type of substrate, the temperature, the humidity, the desired degree of waterproofing, and the specific parts of the one-part, moisture-curable, elastomeric, translucent coating composition. In one embodiment, the amount of coating is from about 10 to about 0.1 millimeters, preferably from about 5 to about 0.5 millimeters and most preferably from about 2 to about 0.2 millimeters.

The one-part, moisture-curable, elastomeric translucent coating compositions herein can be applied by any means commonly known and used by those skilled in the art, such as for example, rolling or spraying.

The process of forming the one-part, moisture-curable, elastomeric, translucent coating composition herein can even further comprise exposing the coating composition to sufficient moisture to provide for curing of the one-part, moisture-curable, elastomeric, translucent coating composition into a cured coating onto the substrate.

Sufficient moisture can comprise at least atmospheric moisture and can extend to any level of moisture necessary to achieve a level of cure of the one-part, moisture-curable, elastomeric, translucent coating composition to a non-tacky state as noted in the above-described periods of time. Exposing the coating composition to sufficient moisture can be conducted in any manner that is commonly used in the coating of substrates as would be known by those skilled in the art.

In one embodiment there Is provided a substrate containing a cured coating made by the process described herein.

In one embodiment herein the coating on the substrate herein can have a modulus at 50% elongation per ASTM D-412 of from about 40psi to about 150psi.

In one other embodiment herein the coating on the substrate herein can have a Shore A durometer value per ASTM C-661 of from about 10 to about 40.

In one other embodiment herein the coating on the substrate herein can have a lap shear adhesion value per ASTM C-961 of from about 40psi to about 140psi.

In one embodiment herein, the one-part, moisture-curable, elastomeric, translucent coating compositions herein can provide the substrate protection against extreme temperatures. An extreme temperature as described herein can be below 40 degrees Fahrenheit, and more specifically below 20 degrees Fahrenheit. In another embodiment herein an extreme temperature as described herein can be above 80 degrees Fahrenheit, specifically above 90 degrees Fahrenheit. The one-part, moisture-curable, elastomeric, translucent coating compositions herein can provide such extreme temperature protection for periods such as those described herein for the UV resistance.

The one-part, moisture-curable, elastomeric, translucent coating compositions herein can be used as coating materials for buildings, specifically, building facades where waterproofing and/or weather protection of the coated material can be used to protect and maintain the original appearance of the building façade.

In one non-limiting embodiment herein, the one-part, moisture-curable, elastomeric, translucent coating composition can be in the absence of water. In yet another embodiment, the composition can be in the absence of any and all minor amounts of water that is used in compositions outside the scope of the invention herein.

In one further embodiment herein there is provided an emulsion that contains the one-part, moisture-curable, elastomeric, translucent coating composition described herein. Specifically, this emulsion is a non-aqueous silicone emulsion.

The emulsification of the one-part, moisture-curable, elastomeric, translucent coating composition into a form that can be suitable to apply to the substrate as described herein, can be those which are known in the art, and specifically wherein the noted mixers, blenders or shakers are located in a continuous or batch production line and/or within a larger industrial apparatus.

Further details of methods of emulsification are well known in the art and shall not be detailed herein.

In one embodiment the one-part, moisture-curable, elastomeric, translucent coating composition is clear or translucent following mixing of the contents of the composition. The mixed composition or emulsion containing the composition can have the noted shelf stability and other noted properties herein and can be in the absence of water as discussed herein.

In another embodiment herein there is also provided a method of treating a building façade comprising applying to an exterior portion of the building facade the one-part, moisture-curable, elastomeric, translucent coating composition described herein and curing the coating composition to provide a cured coating on the building facade.

There is also provided a building façade containing the cured coating described herein.

### Examples:

The example below is provided for the purpose of illustrating the present invention. All parts and/or percentages in the examples are parts by weight (pbw). A continuous compounding extruder was utilized in the manufacture of the one-part moisture curable, elastomeric, translucent coatings. The continuous compounding extruder was a 30 mm Coperion (formerly Wemer-Pfleiderer) Twin-Screw extruder. The resulting one-part, moisture curable, silicone coating compositions exhibited shelf-stable, fast curing, self-bonding characteristics with translucent/clear appearance once applied to the substrate. The silicone coating composition was tested for stability by measuring the viscosity of the compositions before, during, and after a 6-month storage period at 50 degrees Celsius. The compositions were packaged in a sealed aluminum can and placed in a 50 degree Celsius oven. Viscosities were measured at 1-month intervals. The compositions were also tested for modulus at 50% elongation per ASTM D-412, Durometer per ASTM C-661, tensile adhesion per ASTM C-1135 and lap shear adhesion per ASTM C-961. All adhesion testing was done on an Instron Model 4465 testing machine.

In example 1, there was continuously fed into barrel 1 of the extruder, 30 pbw of a 3000 cps PDMS polymer available from MPM, 23.5 pbw of a 500 cps PDMS polymer available from MPM, and 10 pbw of a D4 and hexamethyldisilazane treated fumed silica filler. Into barrel 6 of the extruder there was continuously fed 15 pbw of a C12-C14 aliphatic hydrocarbon fluid available from Penreco Inc and 15 pbw of a D5 VOC-exempt siloxane fluid available from MPM.

Into barrel 7 of the extruder there was continuously fed 3.75-pbw of methyltrimethoxysilane crosslinker, 0.75 pbw tris-trimethoxypropylisocyanurate adhesion promoter, and 2.0 pbw diisopropoxytitanium bis-acetylacetonate condensation cure catalyst.

| | |
|---|---|
| C560 Viscosity, cps | 7,120 |
| E-63 TFT, minutes | 30 |
| Appearance | Translucent/clear |

The processing temperature of the extruder was maintained at 50 degrees Celsius and the production rate was 40 Ib/hr. A de-airing vacuum (25 inches Hg) was applied at barrel 10 of the extruder. The finished composition was packaged into polyethylene cartridges and allowed to equilibrate for 4 days at room temperature prior to testing. Testing results are summarized in the following table:

**Sheet Physicals (7 Day Cure)**

| | |
|---|---|
| E-1 Tensile, psi | 180 |
| E-1 Elongation, % | 150 |
| E-3 Shore A | 25 |
| 50% Modulus | 65 |
| VOC's (gm/L) | 186 |
| Specific Gravity | 0.9773 |
| Flash Point (deg. C) | 60 |

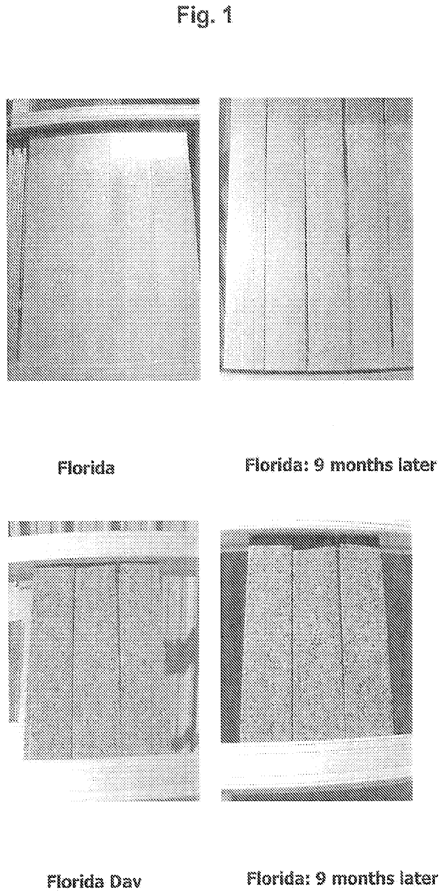

The composition of example 1 was spray applied to brick and aluminum substrates and put on outdoor exposure in Florida. After 9 months exposure there is no change in appearance of the coating as shown in Figure 1.

Cured 1/8 thick sheets of experiment 1 were placed in an Atlas 2000 QUV weatherometer and a Shore A durometer reading was measured on the sheets every 500 hours for a total of 6,000 hours of weatherometer exposure time. Results are shown below:

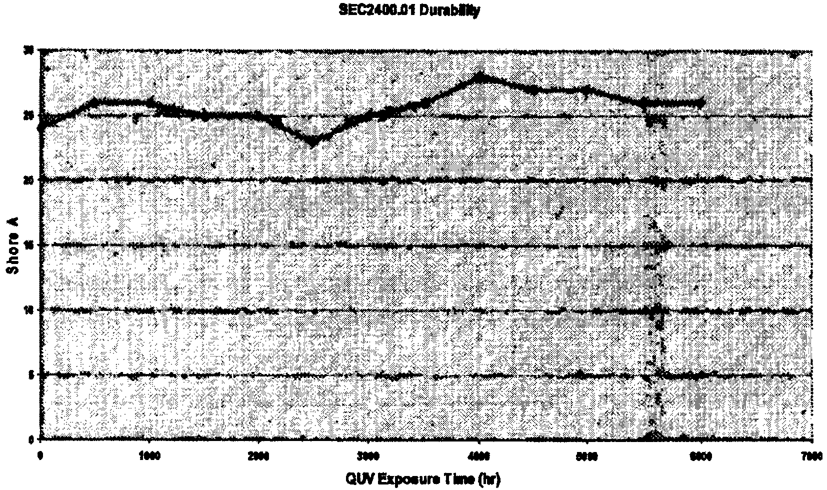

The Atlas 200 Weatherometer and Florida exposure testing results demonstrate that the moisture-curable, translucent, silicone coating composition of Claim 1 has excellent resistance to UV typical of a 100% silicone.

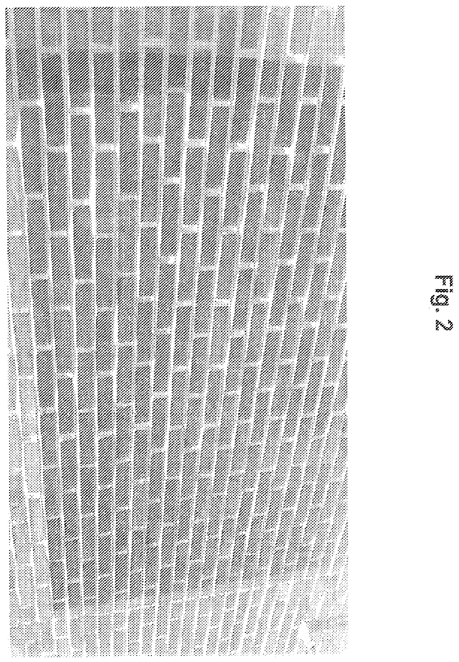

The composition of example 1 was roll-coated on a brick mock-up façade
to give the desired "new brick" appearance and to provide long term weatherproofing as shown in Figure 2.

## Claims

1. A one-part, moisture-curable, elastomeric, translucent coating composition comprising:
(a) a di-hydroxy-terminated dimethylpolysiloxane polymer having a viscosity of less than 5 Pa·s (5,000 cps) at 25°C;
(b) a reinforcing filler;
(c) an organic solvent;
(d) a polyalkoxysilane crosslinking agent;
(e) an organo-silane adhesion promoter; and,
(f) a titanium condensation cure catalyst.

2. The coating composition of Claim 1 wherein the reinforcing filler (b) is fumed silica filler doubly treated with D4 and hexamethyldisilazane.

3. The coating composition of Claim 1 wherein the organic solvent (c) is a linear aliphatic hydrocarbon.

4. The coating composition of Claim 1 wherein the polyalkoxysilane crosslinking agent (d) is methyltrimethoxysilane.

5. The coating composition of Claim 1 wherein the organo-silane adhesion promoter (e) is tris-trimethoxysilylpropylisocyanurate.

6. The coating composition of Claim 1 wherein the titanium curing catalyst is diisopropyl titanium bis-acetylacetonate.

7. The coating composition of Claim 1 which has a stability of at least 1 month.

8. A process of forming a one-part, moisture-curable, elastomeric, translucent coating composition comprising:
combining the parts:
(a) a di-hydroxy-terminated dimethylpolysiloxane polymer having a viscosity of less than 5 Pa·s (5,000 cps) at 25°C;
(b) a reinforcing filler;
(c) an organic solvent;
(d) a polyalkoxysilane crosslinking agent;
(e) an organo-silane adhesion promoter; and,
(f) a titanium condensation cure catalyst.

9. The process of claim 8 further comprising:
applying the combined parts of the coating composition onto a substrate; and,
exposing the coating composition to sufficient moisture to provide for curing of the one-part, moisture-curable, elastomeric, translucent coating composition into a cured coating onto the substrate.

10. A substrate containing the cured coating made by the process of Claim 9.

11. The substrate of Claim 10 wherein the coating has a modulus at 50% elongation per ASTM D-412 of from 276 kPa to 1034 kPa (40 psi to 150 psi).

12. The substrate of Claim 10 wherein the coating has a Shore A durometer value per ASTM C-661 of from 10 to 40.

13. A method of treating a building façade comprising applying to an exterior portion of the building façade a one-part, moisture-curable, elastomeric, translucent coating composition and curing the coating composition to provide a cured coating on the building façade, wherein the one-part, moisture-curable, elastomeric, translucent coating composition comprises:
(a) a di-hydroxy-terminated dimethylpolysiloxane polymer having a viscosity of less than 5 Pa·s (5,000 cps) at 25°C;
(b) a reinforcing filler;
(c) an organic solvent;
(d) a polyalkoxysilane crosslinking agent;
(e) an organo-silane adhesion promoter; and,
(f) a titanium condensation cure catalyst.

14. A building facade containing the cured coating of Claim 13.

## Patentansprüche

1. Einteilige, feuchtigshärtbare, elastomere, durchscheinende Beschichtungszusammensetzung, umfassend:
(a) ein Dihydroxy-terminiertes Dimethylpolysiloxanpolymer mit einer Viskosität von unter 5 Pa•s (5.000 cps) bei 25°C;
(b) einen verstärkenden Füllstoff;
(c) ein organisches Lösungsmittel;
(d) ein Polyalkoxysilan-Vernetzungsmittel;
(e) einen Organosilan-Adhäsionsbeschleuniger; und
(f) einen Titankondensationshärtungskatalysator.

2. Beschichtungszusammensetzung nach Anspruch 1, wobei der verstärkende Füllstoff (b) mit D4 und Hexamethyldisilazan doppelt behandelter Füllstoff aus pyrogenem Siliciumdioxid ist.

3. Beschichtungszusammensetzung nach Anspruch 1, wobei das organische Lösungsmittel (c) ein linearer aliphatischer Kohlenwasserstoff ist.

4. Beschichtungszusammensetzung nach Anspruch 1, wobei das Polyalkoxysilan-Vernetzungsmittel (d) Methyltrimethoxysilan ist.

5. Beschichtungszusammensetzung nach Anspruch 1, wobei der Organosilan-Adhäsionsbeschleuniger (e) Tris-trimethoxysilylpropylisocyanurat ist.

6. Beschichtungszusammensetzung nach Anspruch 1, wobei der Titanhärtungskatalysator Diisopropyl-titan-bis-acetylacetonat ist.

7. Beschichtungszusammensetzung nach Anspruch 1, welche eine Haltbarkeit von mindestens 1 Monat aufweist.

8. Prozess zum Bilden einer einteiligen, feuchtigkeitshärtbaren, elastomeren durchscheinenden Beschichtungszusammensetzung, umfassend:
Kombinieren der Teile:
(a) eines Dihydroxy-terminierten Dimethylpolysiloxanpolymers mit einer Viskosität von unter 5 Pa•s (5.000 cps) bei 25°C;
(b) eines verstärkenden Füllstoffs;
(c) eines organischen Lösungsmittels;
(d) eines Polyalkoxysilan-Vernetzungsmittels;
(e) eines Organosilan-Adhäsionsbeschleunigers; und
(f) eines Titankondensationshärtungskatalysators.

9. Prozess nach Anspruch 8, weiterhin umfassend:
Aufbringen der kombinierten Teile der Beschichtungszusammensetzung auf ein Substrat; und
Einwirkenlassen von ausreichend Feuchtigkeit auf die Beschichtungszusammensetzung, um ein Härten der einteiligen, feuchtigkeitshärtbaren, elastomeren, durchscheinenden Beschichtungszusammensetzung zu einer gehärteten Beschichtung auf dem Substrat vorzusehen.

10. Substrat, welches die durch den Prozess nach Anspruch 9 hergestellte gehärtete Beschichtung enthält.

11. Substrat nach Anspruch 10, wobei die Beschichtung ein Modul bei 50% Dehnung gemäß ASTM D-412 von 276 kPa bis 1034 kPa (40 psi bis 150 psi) aufweist.

12. Substrat nach Anspruch 10, wobei die Beschichtung einen Shore-A-Durometer-Wert gemäß ASTM C-661 von 10 bis 40 aufweist.

13. Verfahren zum Behandeln einer Gebäudefassade, umfassend das Aufbringen einer einteiligen, feuchtigkeitshärtbaren, elastomeren, durchscheinenden Beschichtungszusammensetzung auf einen äußeren Abschnitt der Gebäudefassade und Härten der Beschichtungszusammensetzung, um auf der Gebäudefassade eine gehärtete Beschichtung vorzusehen, wobei die einteilige, feuchtigshärtbare, elastomere, durchscheinende Beschichtungszusammensetzung umfasst:
(a) ein Dihydroxy-terminiertes Dimethylpolysiloxanpolymer mit einer Viskosität von unter 5 Pa•s (5.000 cps) bei 25°C;
(b) einen verstärkenden Füllstoff;
(c) ein organisches Lösungsmittel;
(d) ein Polyalkoxysilan-Vernetzungsmittel;
(e) einen Organosilan-Adhäsionsbeschleuniger; und
(f) einen Titankondensationshärtungskatalysator.

14. Gebäudefassade, welche die gehärtete Beschichtung nach Anspruch 13 enthält.

## Revendications

1. Composition de revêtement translucide élastomère durcissable à l'humidité monocomposant comprenant :
(a) un polymère diméthylpolysiloxane à double terminaison hydroxyle ayant une viscosité inférieure à 5 Pa·s (5 000 cps) à 25 °C ;
(b) une charge de renforcement ;
(c) un solvant organique ;
(d) un agent de réticulation polyalkoxysilane ;
(e) un promoteur d'adhérence organosilane ; et
(f) un catalyseur de durcissement par condensation au titane.

2. Composition de revêtement selon la revendication 1 dans laquelle la charge de renforcement (b) est une charge de silice fumée doublement traitée par le D4 et l'hexaméthyldisilazane.

3. Composition de revêtement selon la revendication 1 dans laquelle le solvant organique (c) est un hydrocarbure aliphatique linéaire.

4. Composition de revêtement selon la revendication 1 dans laquelle l'agent de réticulation polyalkoxysilane (d) est le méthyltriméthoxysilane.

5. Composition de revêtement selon la revendication 1 dans laquelle le promoteur d'adhérence organosilane (e) est le tris-triméthoxysilylpropylisocyanurate.

6. Composition de revêtement selon la revendication 1 dans laquelle le catalyseur de durcissement au titane est le bis-acétylacétonate de diisopropyle-titane

7. Composition de revêtement selon la revendication 1 qui a une stabilité d'au moins 1 mois.

8. Procédé de formation d'une composition de revêtement translucide élastomère durcissable à l'humidité monocomposant comprenant :
la combinaison des parties :
(a) un polymère diméthylpolysiloxane à double terminaison hydroxyle ayant une viscosité inférieure à 5 Pa·s (5 000 cps) à 25 °C ;
(b) une charge de renforcement ;
(c) un solvant organique ;
(d) un agent de réticulation polyalkoxysilane ;
(e) un promoteur d'adhérence organosilane ; et
(f) un catalyseur de durcissement par condensation au titane.

9. Procédé selon la revendication 8 comprenant en outre :
l'application des parties combinées de la composition de revêtement sur un substrat ; et
l'exposition de la composition de revêtement à une humidité suffisante pour assurer le durcissement de la composition de revêtement translucide élastomère durcissable à l'humidité monocomposant en un revêtement durci sur le substrat.

10. Substrat contenant le revêtement durci fabriqué par le procédé selon la revendication 9.

11. Substrat selon la revendication 10 dans lequel
le revêtement a un module sous un allongement de 50 % suivant l'ASTM D-412 allant de 276 kPa à 1 034 kPa (40 psi à 150 psi).

12. Substrat selon la revendication 10 dans lequel
le revêtement a une valeur au duromètre Shore A suivant l'ASTM C-661 allant de 10 à 40.

13. Procédé de traitement d'une façade de bâtiment comprenant l'application sur une partie extérieure de la façade de bâtiment d'une composition de revêtement translucide élastomère durcissable à l'humidité monocomposant et le durcissement de la composition de revêtement pour fournir un revêtement durci sur la façade de bâtiment, où
la composition de revêtement translucide élastomère durcissable à l'humidité monocomposant comprend :
(a) un polymère diméthylpolysiloxane à double terminaison hydroxyle ayant une viscosité inférieure à 5 Pa·s (5 000 cps) à 25 °C ;
(b) une charge de renforcement ;
(c) un solvant organique ;
(d) un agent de réticulation polyalkoxysilane ;
(e) un promoteur d'adhérence organosilane ; et
(f) un catalyseur de durcissement par condensation au titane.

14. Façade de bâtiment contenant le revêtement durci selon la revendication 13.
